(19) Europäisches Patentamt

European Patent Office

Office européen des brevets

(11) **EP 1 180 326 B1**

(12) **EUROPÄISCHE PATENTSCHRIFT**

(45) Veröffentlichungstag und Bekanntmachung des Hinweises auf die Patenterteilung:
**28.09.2005 Patentblatt 2005/39**

(51) Int Cl.[7]: **A01N 31/08**

(21) Anmeldenummer: **01118722.6**

(22) Anmeldetag: **06.08.2001**

(54) **ortho-Phenylphenolat-Konzentrate**

Concentrates of ortho-phenylphenolat

Concentrés de l'ortho-phénylphénolate

(84) Benannte Vertragsstaaten:
**AT BE CH CY DE DK ES FI FR GB GR IE IT LI LU MC NL PT SE TR**

(30) Priorität: **17.08.2000 DE 10040165**

(43) Veröffentlichungstag der Anmeldung:
**20.02.2002 Patentblatt 2002/08**

(73) Patentinhaber: **LANXESS Deutschland GmbH
51369 Leverkusen (DE)**

(72) Erfinder:
 • **Wachtler, Peter, Dr.
  47800 Krefeld (DE)**
 • **Wirges, Hans-Peter, Dr.
  47800 Krefeld (DE)**

(56) Entgegenhaltungen:
**WO-A-00/36913**

**Beschreibung**

Die Erfindung betrifft froststabile wässrige, alkalische Lösungen von o-Phenylphenol hoher Konzentration und deren Verwendung als Konservierungsmittel.

o-Phenylphenol (OPP) ist ein wichtiger Wirkstoff zur Herstellung von Konservierungsmitteln zum Schutz von technischen Gütern wie Leimen oder Klebstoffen, Betonadditiven, Kühlschmierstoffen, Pigmentslurrys u.a.. Konservierungsmittel für technische Güter haben bestimmungsgemäß die Aufgabe, die damit ausgerüsteten Produkte vor mikrobiellem Verderb zu schützen. Hierzu müssen sich die Konservierungsmittel überwiegend in der wässrigen Phase befinden, um die dort lebenden Mikroorganismen zu erreichen. Eine Voraussetzung für die Wirksamkeit von Konservierungsmitteln ist es demzufolge, dass sie über eine ausreichende Wasserlöslichkeit besitzen. Dies ist nun bei Konservierungsmitteln auf Basis phenolischer Wirkstoffe nicht immer in dem gewünschten Maße gegeben. So hat z.B. der Wirkstoff o-Phenylphenol (vgl. z.B. W. Paulus, "Microbicides for the Protection of Materials", Chapman & Hall, 1993, Seite 170 ff.) in neutralem Wasser nur eine Löslichkeit von ca. 0,02 Gew.-%. Zur problemlosen Einarbeitung dieses Wirkstoffs in technische Güter ergibt sich somit die Notwendigkeit, den mikrobiziden Wirkstoff zunächst vorzulösen, um ihn in eine für die Weiterverarbeitung besser geeignete Form zu überführen. Hierzu wird in der Praxis üblicherweise eine Lösung in Laugen (Natronlauge, Kalilauge), Alkoholen, Glykolen o.ä. hergestellt und dann das erhaltene flüssige Biozidprodukt in der notwendigen Menge dem zu schützenden Produkt zugegeben. Besonders vorteilhaft unter anwendungstechnischen Gesichtspunkten ist dabei die Überführung von OPP in das entsprechende Phenolat durch Neutralisation mit Basen (beispielsweise LiOH, NaOH, KOH, Ca(OH)$_2$), da die Alkalisalze bzw. Erdalkalisalze von OPP gegenüber dem freien OPP eine erheblich höhere Löslichkeit in Wasser aufweisen.

Bei der bereits bekannten und weit verbreiteten Methode der Vorlösung in Natronlauge ergibt sich das Problem, dass mit zunehmendem Wirkstoffgehalt (berechnet auf OPP) schon bei relativ geringen OPP-Konzentrationen Lösungen mit einem für die praktische Anwendung zu hohen Kristallisationspunkt erhalten werden. Solche Lösungen sind aufgrund ihrer teilweise schon bei Temperaturen oberhalb von 0°C eintretenden Kristallisation in der betrieblichen Praxis schwer in kontrollierbarer Weise einsetzbar, insbesondere in der kälteren Jahreszeit, in der es zur unerwünschten Verfestigung des Biozidproduktes in Tanklagern, Leitungen und Pumpen kommen kann. Dieser Prozess macht zeit- und kostenaufwendige Maßnahmen zur Wiederverflüssigung des Biozidprodukt notwendig und kann zu Produktionsstillständen führen. Darüber hinaus kann es im Zuge einer unkontrollierten Verfestigung in Rohren und Pumpen zu Druckaufbau und Leckagen kommen, was unter dem Gesichtspunkt der Arbeitssicherheit ein Risiko darstellt.

Die Kristallisationsneigung wässriger Lösungen von o-Phenylphenol (OPP) in wässriger NaOH lässt sich folgender Tabelle entnehmen:

| Gew.-% OPP | Kristallisationsbeginn °C |
|---|---|
| 18,8 | -7 |
| 21,8 | -3 |
| 25,0 | 3,5 |
| 28,1 | 10 |

Zur Bereitstellung höher konzentrierter Lösungen von OPP in Laugen wurden neben den oben beschriebenen Lösungen in Natronlauge bereits solche in Kalilauge beschrieben. Hierbei wurden jedoch bisher nur Abmischungen bis zu einer maximalen Konzentration von 30 Gew.-% OPP hergestellt und einer kommerziellen Verwendung zugeführt. Neben dem für viele Anwendungen zu hohen Alkaliüberschuss der bekannten 30 %igen OPP-Lösung ist der Wirkstoffgehalt dieser Formulierung im Sinne einer optimierten Logistik nach wie vor zu gering, da beim Versand und in der innerbetrieblichen Logistik große Anteile Wasser bewegt werden müssen, was zu einer unwirtschaftlichen Arbeitsweise führt und darüber hinaus aus ökologischer Sicht verbesserungswürdig erscheint.

Aus WO 00/36913 sind wässrige, Phenol und/oder Phenolderivate enthaltende Formulierungen bekannt, die eine oder mehrere Glykolverbindungen und/oder Glycerin enthalten.

WO 01/85659 offenbart wässrige Phenolat-Formulierungen mit einem Erstarrungspunkt von kleiner oder gleich - 10°C, enthaltend a) 50-80 Gew.-% eines oder mehrerer Phenolate b) 0,1-10 Gew.-% mindestens eines Kristallisationshemmer, Wasser und gegebenenfalls weitere Bestandteile.

Die Aufgabe der vorliegenden Erfindung bestand nun darin, wässrige alkalische Lösungen von OPP bereitzustellen, die die oben beschriebenen Nachteile der bekannten Lösungen nicht aufweisen.

Aufgabe ist insbesondere die Bereitstellung von höherkonzentrierten Lösungen (>30 Gew.-% OPP) von OPP in wässrig-alkalischem Medium die auch bei Temperaturen unter 0°C über die Dauer der Lagerung und Anwendung stabil bleiben, ohne dass es zur Kristallisation kommt.

Jetzt wurde überraschenderweise gefunden, dass man konzentrierte, auch bei niedrigen Temperaturen kristallisationsstabile Lösungen von OPP-Salzen in Wasser erhält, wenn man die Bestandteile in bestimmten Mengenverhältnissen mischt.

Die erfindungsgemäßen Lösungen werden demnach hergestellt, indem man Wasser, OPP und die zur Bildung des OPP-Salzes benötigte Base in bestimmten Verhältnissen mischt.

Als Base für die Herstellung der erfindungsgemäßen OPP-Konzentrate wird Kaliumhydroxid (KOH) eingesetzt.

Überraschenderweise wurde gefunden, dass die geschilderte Aufgabe gelöst werden kann, indem OPP und Kaliumhydroxid in einem festgelegten Verhältnis gemischt werden und eine zur Erreichung der gestellten Aufgabe notwendige Konzentration an OPP in der Lösung eingestellt wird. Überraschenderweise gelingt es, Lösungen mit einem Gehalt von 45 Gew.-% OPP herzustellen, die auch bei tiefen Temperaturen kristallisationsstabil sind.

Die erfindungsgemäßen OPP-Konzentrate werden aus (a) Kaliumhydroxid (b) OPP und (c) Wasser hergestellt.

Das molare Verhältnis von o-Phenylphenol zu Kaliumhydroxid liegt dabei zwischen 1:1,02 - 1:1,10.

Der Gehalt an OPP beträgt 45 %. Er wird nach folgender Formel berechnet:

$$\text{Gew.-\% OPP} = \frac{\text{Einwaage OPP}}{\text{Einwaage Wasser} + \text{Einwaage Base} + \text{Einwaage OPP}} \cdot 100$$

Die erfindungsgemäßen OPP-Konzentrate werden als Konservierungsmittel für technische Güter verwendet (vgl. z.B. W. Paulus "Microbicides for the Protection of Materials, Chapman & Hall, 1993, Seite 170 ff.), um diese vor mikrobiellem Verderb zu schützen. Als Beispiele für technische Güter seien Leime, Klebstoffe, Betonadditive, Fugendichtungsmassen, Kühlschmiermittel, Druckverdicker, Polymerdispersionen, Detergentien und Tenside, Wachsemulsionen und Polituren, Bohrschlämme, Anstrichmittel und Farben, Bitumenemulsionen und Pigmentslurrys genannt.

#### Beispiel :Froststabiles o-Phenylphenol-Kalium-Konzentrat

a) Zu einer Lösung aus 312,0 g demineralisiertem Wasser und 188,0 g KOH (91,9 %ig) wurden unter Rühren bei 20°C 500,0 g o-Phenylphenol (= 50 Gew.-% OPP) zugegeben und so lange weiter gerührt, bis eine klare Lösung entstand. Danach wurde die Lösung unter Rühren bis zur Kristallisation abgekühlt. Nach der erfolgten Kristallisation wurde wieder langsam aufgeheizt. Die Temperatur, bei der sich die letzten Kristalle aufgelöst haben, ist die Löslichkeitstemperatur. Für die gemäß dieser Zusammensetzung untersuchte Lösung wurde eine Löslichkeitstemperatur von +4°C gefunden, d.h. eine solche Lösung erfüllt nicht die erfindungsgemäßen Ansprüche.

b) Zu einer Lösung aus 380,8 g demineralisiertem Wasser und 169,2 g KOH (91,9 %ig) wurden unter Rühren bei 20°C 450,0 g o-Phenylphenol (= 45 Gew.-% OPP) zugegeben und so lange weiter gerührt, bis eine klare Lösung entstand. Danach wurde die Lösung unter Rühren bis zur Kristallisation abgekühlt. Nach der erfolgten Kristallisation wurde wieder langsam aufgeheizt. Die Temperatur, bei der sich die letzten Kristalle aufgelöst haben, ist die Löslichkeitstemperatur. Für die gemäß dieser Zusammensetzung untersuchte Lösung wurde eine Löslichkeitstemperatur von < -20°C gemessen, d.h. eine solche Lösung enthält einen gegenüber dem bisherigen Stand der Technik wesentlich höheren Gehalt an OPP und ist gleichzeitig auch bei tiefen Temperaturen noch sicher zu handhaben.

#### Patentansprüche

**1.** Mischungen enthaltend Wasser, o-Phenylphenyl (OPP) und Kaliumhydroxid (KOH), **dadurch gekennzeichnet, dass** das molare Verhältnis von OPP zu KOH zwischen 1:1,02 und 1:1,10 liegt und der Anteil an OPP in der Mischung 45 Gew.-% beträgt.

**2.** Verfahren zur Herstellung der Mischung gemäß Anspruch 1, **dadurch gekennzeichnet, dass** man Wasser, OPP und eine oder mehr als eine Base in den angegebenen Mengenverhältnissen miteinander vermengt.

**3.** Verwendung der Mischung gemäß Anspruch 1 als Konservierungsmittel für technische Güter.

**4.** Verfahren zum Schutz technischer Güter, **dadurch gekennzeichnet, dass** man diese mit einer Mischung gemäß Anspruch 1 behandelt.

## Claims

1. Mixtures, comprising water, o-phenylphenyl (OPP) and potassium hydroxide (KOH), **characterized in that** the molar ratio of OPP to KOH is from 1:1.02 to 1:1.10 and the proportion of OPP in the mixture is 45% by weight.

2. Process for preparing the mixture according to Claim 1, **characterized in that** water, OPP and one or more bases are mixed with one another in the stated ratios.

3. Use of the mixture according to Claim 1 as a preservative for industrial materials.

4. Method for protecting industrial materials, **characterized in that** they are treated with a mixture according to Claim 1.

## Revendications

1. Mélanges contenant de l'eau, de l'o-phénylphénol (OPP) et de l'hydroxyde de potassium (KOH), **caractérisés en ce que** le rapport molaire OPP/KOH va de 1:1,02 à 1:1,10 et **en ce que** la concentration de l'OPP dans le mélange est de 45 % en poids.

2. Procédé pour la préparation du mélange selon la revendication 1, **caractérisé en ce que** l'on mélange entre eux l'eau, l'OPP et une ou plusieurs bases aux proportions spécifiées.

3. Utilisation du mélange selon la revendication 1 en tant que conservateur pour des produits techniques.

4. Procédé pour la protection des produits techniques, **caractérisé en ce que** l'on traite ces produits par un mélange selon la revendication 1.